# EUROPEAN PATENT SPECIFICATION

(11) **EP 3 021 419 B1**
(45) Date of publication and mention of the grant of the patent: **03.06.2020**
(21) Application number: 14290343.4
(22) Date of filing: 11.11.2014
(51) Int. Cl.: H01Q 15/14, H01Q 19/10, H04B 7/145, H01Q 1/00

(54) **Reflector device and method of operating a reflector device**
Reflektorvorrichtung und Verfahren zum Betrieb einer Reflektorvorrichtung
Dispositif réflecteur et procédé de fonctionnement d'un dispositif réflecteur

(43) Date of publication of application: 18.05.2016
(73) Proprietor: Alcatel Lucent, 91620 Nozay (FR)
(72) Inventor: Wiegner, Dirk, 70435 Stuttgart (DE); Pascht, Andreas, 70435 Stuttgart (DE); Templ, Wolfgang, 70435 Stuttgart (DE)
(74) Representative: DREISS Patentanwälte PartG mbB

(56) References cited:
- EP-A1- 1 162 764
- WO-A1-01/31714
- WO-A1-2009/012361
- JP-A- 2005 244 362
- US-A- 5 697 063
- US-A1- 2012 206 299
- US-A1- 2014 266 955

## Description

### Field of the invention

The invention relates to a reflector device for microwaves, particularly for millimeter waves, and to a method of operating such reflector device.

The invention also relates to a control device for controlling an operation of such a reflector device.

### Background

Propagation of electromagnetic waves in the frequency range of several tens to hundreds GHz (millimeter waves, "mm-waves") is limited by atmospheric attenuation effects and obstruction by liquid and solid objects like e.g. persons or walls. This effect is to one end desirable because it may limit the irradiated area and thus give room for spatial multiplexing scenarios, but it is also detrimental when considering deployment of wireless infrastructure e.g. in buildings because the backhaul of a mm-wave transceiver station has to be based on fixed line technologies (copper ("Cu") or favorably fiber) involving high installation effort. When resorting to wireless mm-wave backhaul the installation will require multiple relay stations.

Within conventional systems, this problem is frequently addressed by choosing lower carrier frequency systems resulting in bandwidth limitations, or by installation of a high number of mm-wave-relay transceivers at different locations in order to enable wireless backhaul. The latter solution results in high hardware effort and costs. Alternatively the mm-wave transceivers may be linked by fiber or Cu-lines, involving high wiring and installation effort and involving constraints form the building architecture.

US 2014/266955 A1 discloses systems and methods for a reconfigurable faceted reflector for producing a plurality of antenna patterns within orbital applications. WO 2009/012361 A1 discloses antennas operable with electroactive polymer actuators for supporting flexible radio placement. WO 01/31714 A1 discloses systems and methods for control membrane structures by electroactive bending actuators.

### Summary

Thus, it is an object of the present invention to provide an improved reflector device and an improved method of operating such reflector device as well as an improved control device which avoid the problems of the prior art systems.
Regarding the reflector device, this object is achieved by claim 1. Said reflector device comprises a plurality of reflector elements, wherein said reflector device is configured to move at least one reflector element of said plurality of reflector elements with respect to at least one further reflector element of said plurality of reflector elements. This advantageously enables to influence a reflective characteristic of the reflector device so that e.g. a primary direction of reflection of incident electromagnetic radiation in the microwave frequency range on said reflector device can be altered thus enabling to establish a data link between e.g. microwave transceivers that have no direct line of sight ("LOS") connection with each other. For example, the reflector device according to the embodiments may be employed to receive microwave radiation emitted a at first microwave transceiver from a first direction and to reflect said received microwave radiation into another direction, i.e. to a further microwave transceiver.
Thus, advantageously, wired backhaul systems are not required. Moreover, a precise alignment of the reflector device during deployment is not required, because a tuning of the reflective properties of the reflector device may be performed after deployment in the field by respectively moving one or more of the reflector elements of said reflector device.

Advantageously, said reflector device comprises at least one drive system for moving said at least one reflector element. Generally, any type of movement (translation, rotation, combinations thereof) is possible and depends on the specific mechanical implementation.

According to further embodiments, it is also possible to provide different mounting techniques for different reflector elements so that e.g. some reflector elements may be rotated, whereas some other reflector elements of the reflector device may be translated.

Further advantageously, the drive system comprises at least one electro-active polymer (EAP) actuator. Electro-active polymers are per se known and are well-suited for driving the reflector elements of the reflector device according to the embodiments because they require a comparatively small amount of electrical energy for control and - according to some embodiments - control energy is usually only required when driving the EAP-actuators to alter their geometry. In other words, in a static operational state, where an EAP actuator is assumed to retain its shape, no electrical energy for driving the EAP-actuator is required.

According to a further embodiment, in addition to the EAP actuators, other types of electro-mechanic actuators such as piezo-electric actuators or electro-magnetic actuators or actuators comprising further "smart" electroactive materials or the like are possible.

According to a further embodiment, a reflector element may comprise an electrically conductive surface such as e.g. a metal surface or a metallized surface or the like. For example, according to one embodiment, a reflector element may comprise an EAP actuator one surface of which is metal plated or has attached to it a metallized component.

According to the invention, said reflector device comprises a substrate, wherein said plurality of reflector elements is arranged on a first surface of said substrate, and wherein at least one mounting element for mounting said reflector device for a further device, particularly to a surface of a wall, is arranged on at least one further surface of said substrate. According to a further embodiment, said mounting element may comprise and adhesive layer such as a "sticky" film which enables to flexibly arrange the reflector device according to the embodiments e.g. at a surface of a wall of an office building or the like. As already mentioned above, during deployment, i.e. mounting, of the reflector device in the field, e.g. on a wall or the like, no precise alignment is required, because the reflective characteristic of the reflector device may be (fine-)tuned afterwards by moving the at least one reflector element.

According to a further embodiment, the reflector device comprises a) a local control unit and/or b) an interface for connecting an external control device for controlling an operation of said reflector device.

A local control unit and/or said external control device may e.g. comprise a calculating unit such as a microcontroller or a digital signal processor or the like which may generate appropriate control signals, i.e. control voltages, for actuating the EAP actuators (or other types of actuators) of the drive system of the respective reflector elements. Such control may e.g. be performed depending on a user input to the control unit/control device and/or may form part of an open loop / closed loop control process for tuning the reflector device.

According to a further embodiment, said reflector device comprises an electrical energy supply which e.g. enables to provide electrical energy to an electronic drive system in order to move the specific reflector elements. Said electrical energy supply may e.g. comprise a battery and/or accumulator and/or a photovoltaic generator or the like. According to an embodiment of the invention, at least one drive system for moving said at least one reflector element comprises a dielectric EAP actuator, which advantageously requires no power to keep the actuator at a fixed position. I.e., electric energy for driving the dielectric EAP actuator is only required when altering the shape of the dielectric EAP actuator.
A further solution to the object of the present invention is provided by a method of operating a reflector device according to claim 6.
Further solutions to the object of the present invention are provided by a control device for controlling an operation of a reflector device according to the embodiments and a communication system according to claim 9. According to an embodiment, said first transceiver is configured to transmit said microwave signals to said second transceiver via said reflector device and/or wherein said second transceiver is configured to transmit said microwave signals to said first transceiver via said reflector device.

### Brief description of the figures

Further features, aspects and advantages of the present invention are given in the following detailed description with reference to the drawings in which:
- Figure 1: schematically depicts a block diagram of a reflector device according to an embodiment,
- Figure 2: schematically depicts details of a reflector element according to an embodiment,
- Figure 3: schematically depicts a perspective view of a reflector device according to a further embodiment,
- Figure 4: schematically depicts a perspective view of a reflector element according to a further embodiment,
- Figure 5: schematically depicts a top view of an application scenario according to an embodiment,
- Figure 6: schematically depicts a simplified flow chart of a method according to an embodiment, and
- Figure 7: schematically depicts a simplified flow chart of a method according to a further embodiment.

### Description of the embodiments

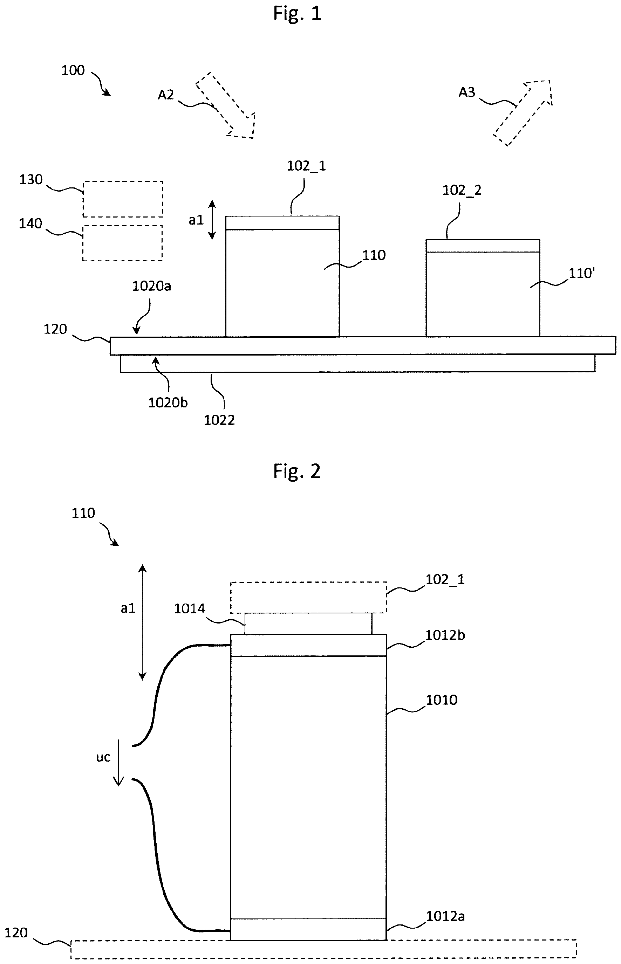

Figure 1 schematically depicts a block diagram of a reflector device 100 according to an embodiment. The reflector device 100 is configured to receive microwaves, particularly millimeter waves, wherein a corresponding incident radiation energy is symbolized in figure 1 by dashed arrow A2. Further, the reflector device 100 is configured to reflect said incident radiation energy, cf. dashed arrow A3.

To enable high operational flexibility, the reflector device 100 according to the embodiments is capable of tuning its reflector characteristics, i.e. in order to influence a direction in which received incident energy A2 is reflected.

For this purpose, the reflector device 100 comprises a plurality of reflector elements 102_1, 102_2, wherein said reflector device 100 is configured to move at least one reflector element 102_1 with respect to at least one further reflector element 102_2.

According to an embodiment, the reflector device 100 comprises a drive system 110 which is arranged on a surface 1020a of a substrate 120 carrying both reflector elements 102_1, 102_2.

The drive system 110 advantageously comprises at least one electro-mechanic actuator, preferably of the EAP (electro-active polymer) type. By applying an electric control voltage to the EAP actuator of the drive system 110, at least one mechanical dimension of the EAP actuator and thus of the drive system 110 as depicted by figure 1 may be altered in a per se known manner, which is symbolized by a double arrow a1 in figure 1.

Presently, only the first reflector element 102_1 is equipped with a drive system 110 and is thus movable with respect to the substrate 120 and the further reflector element 102_2. According to the present embodiment, the further reflector element 102_2 comprises a passive base 110' which may e.g. comprise a substantially similar shape as compared to the drive system 110.

According to further embodiments, the second reflector element 102_2 as well as further reflector elements (not shown in figure 1 for the sake of simplicity) may also comprise respective drive systems similar in configuration to the drive system 110 of reflector element 102_1 explained above.

According to a particularly advantageous embodiment, a plurality of reflector elements of the reflector device 100 comprises an individual drive system each which enables individual movement of the respective reflector elements with respect to each other and with respect to the common substrate 120. Thus, many degrees of freedom regarding setting a desired reflective characteristic of the reflector device are given.

According to a further embodiment, the reflector device 100 may comprise a mounting element 1022 which enables to mount/attach said reflector device 100 to a further device (not shown in Fig. 1), particularly to a surface of a wall or the like. Presently, the mounting element 1022 is arranged at a second surface 1020b of the substrate 120 which is opposite to the first surface 1020a that carries the reflector elements 102_1, 102_2. According to a preferred embodiment, the mounting element 1022 comprises an adhesive layer, e.g. a sticky film or the like, so that the reflector device 100 may be placed on a suitable location (e.g., a wall on an opposite side of a door frame in an office building or the like).

Optionally, according to a further embodiment, .the reflector device 100 may also comprise a local control unit 130 which is configured to control the one or more drive systems 110 (e.g., by applying respective control voltages to individual EAP actuators) and thus to control movement of the respective reflector elements of the reflector device 100. While being schematically depicted by a dashed rectangle in figure 1, the local control unit 130 may also be provided in form of an electric printed circuit board or the like and may e.g. be incorporated in the common substrate 120 or the like.

Alternatively or in addition to the local control unit 130, an external control device, which is explained further below, may be provided to control an operation of the reflector device 100. In this case, the reflector device 100 according to an embodiment may comprise an interface (wired and/or wireless) for connecting to said external control device.

According to a further embodiment, optionally, said reflector device 100 may comprise an electrical energy supply 140 such as e.g. a battery and/or an accumulator or the like.

Figure 2 schematically depicts a side view of a drive system 110 of a reflector element 102_1 according to an embodiment. The drive system 110 comprises an electro-active polymer actuator 1010, preferably of the dielectric, type, which retains its shape in the absence of an external control signal.

The drive system 110 also comprises electrically conductive electrodes 1012a, 1012b on opposing front surfaces of the EAP actuator 1010 for applying a respective control voltage uc to the electro-active polymer actuator 1010, which may result in an altering geometry of the EAP actuator 1010 as depicted by double arrow a1 in figure 2.

The drive system 110 with its first electrode 1012a may e.g. be arranged on the first surface 1020a (Fig. 1) of the common substrate 120, and the second electrode 1012b may be comprised on a surface of a non-conductive layer 1014, e.g. an electrically isolating layer, which in turn may carry a reflector element 102_1.

The reflector element 102_1 may e.g. comprise an electrically conductive material layer such as a metal layer or a metalized plastic layer or the like.

According to a further embodiment, the electrode 1012_b may also act as reflector element for the millimetre wave radiation.

Although in general it is not required for the principle of reflection of incident electro-magnetic energy A2 (figure 1), the reflector element 102_1 may also comprise an electrical terminal (not shown) which enables to receive an electrical signal characteristic of the incident electro-magnetic energy on said reflector element 102_1. Such signal may e.g. be evaluated by a control unit provided for controlling an operation of the reflector device 100 according to the embodiments.

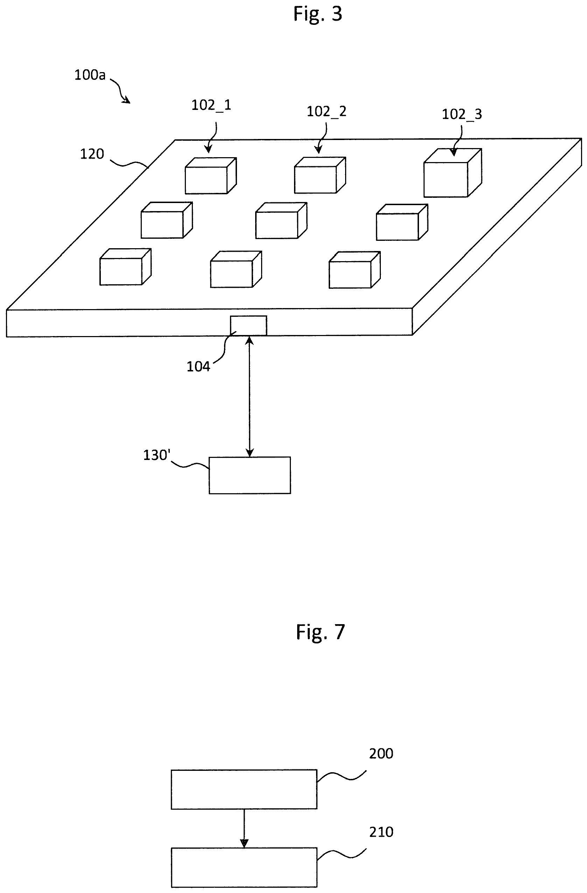

Figure 3 schematically depicts a perspective view of a reflector device 100a according an embodiment. The reflector device 100a comprises in total 9 reflector elements 102_1, 102_2, 102_3, .. which are arranged on the common substrate 120. One or more of said reflector elements may be provided with a drive system 110 as described above with reference to figure 1 in order to enable individual movement of said reflector elements or of corresponding groups of reflector elements.

By altering the positions, preferably the vertical positions, of the respective reflector elements with respect to each other and/or the common substrate 120 reflective properties of the reflector element 100a may be tuned to a desired value.

According to the present embodiment, the individual reflector elements are arranged in matrix form (i.e., in rows and columns of 3 reflector elements each). However, according to further embodiments, other arrangements of reflector elements on the substrate are also possible, i.e. circular or elliptical shape or pseudo-random distribution of the reflector elements on the substrate and the like.

Optionally, an external control device 130' may be connected to the reflector device 100a by means of its interface 104. Thus, the control device 130' may e.g. control the application of control voltages to the EAP actuators of the individual reflector elements 102_1, 102_2, 102_3, .. and hence a resulting overall reflective characteristic.

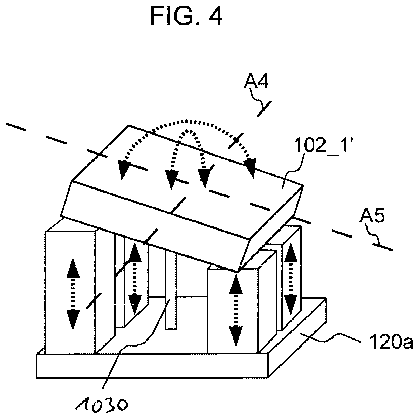

Figure 4 schematically depicts a perspective view of a reflector element 102_1' according to a further embodiment. Presently, four electro-active polymer actuators are comprised at respective edges of a basically rectangular substrate 120a, and the reflector element 102_1' is rotatably/tiltably mounted on a central mounting pole 1030 so that the reflector element 102_1' may be rotated around one or two of the axes A4, A5 depending on the respective geometry of the four electro-active polymer actuators and the control voltages applied thereto. Presently, each of the four electro-active polymer actuators may alter at least its vertical dimension (cf. the dotted double arrows) under application of said control voltage. While not shown, embodiments with less than four actuators for one reflector element 102_1' are also possible. Also, according to a further embodiment, as explained above with reference to figure 1, the substrate 120a may comprise an adhesive film. Alternatively or in addition, more than one unit of the type depicted by Fig. 4 may be arranged on a common substrate 120.

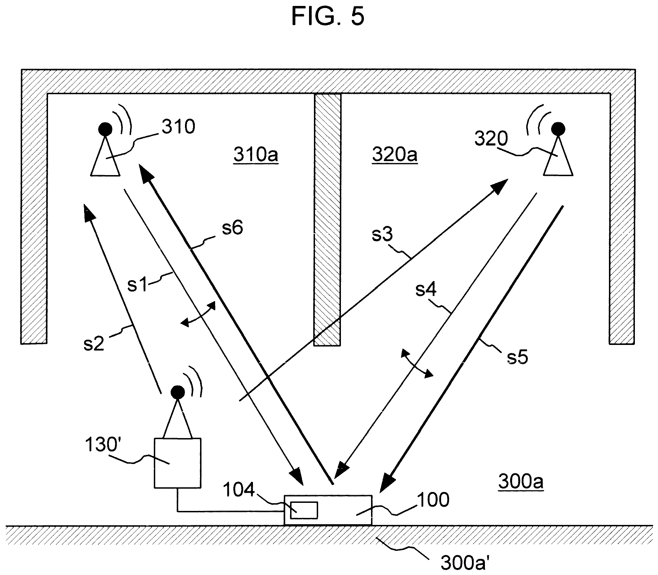

Figure 5 schematically depicts an operational scenario of a communication system comprising a reflector device 100 according to an embodiment. Depicted by figure 5 is a top view of a part of an office building with a corridor 300a that is connecting two neighbouring office rooms 310a, 320a with each other. Arranged in the first office room 310a is a first transceiver 310 capable of transmitting and/or receiving microwave signals, especially millimeter-wave signals. A second receiver 320 similar to or identical in configuration to the first receiver 310 is arranged in the second office 320a.

According to a preferred embodiment, both transceivers 310, 320 may have a controllable antenna characteristic for transmitting and/or receiving said microwave signals, e.g. of the pencil-beam type, which enables to set up directed RF beams with small opening angles of a main lobe. However, according to further embodiments, the transceivers 310, 320 may have no controllable beam pattern or may comprise an isotropic antenna (German: "isotroper Kugelstrahler") which radiates RF power uniformly in all directions.

In view of the fact that there is no direct line of sight connection between the transceivers 310, 320, a reflector device 100 according to the embodiments is provided to enable a millimeter-wave radio signal exchange between the transceiver locations. As can be seen from figure 5, the reflector device 100 according to the embodiments is mounted on a side wall 300a' of the corridor 300a. Thus, there is a direct line of sight connection between the reflector device 100 and either of the transceivers 310, 320. Advantageously, according to the principle of the embodiments, the reflective characteristic of the reflector device 100 may be tuned, even after installation of said reflector device 100 on the side wall 300a', to optimize the millimeter-wave radio signal exchange between the transceiver locations in the office rooms 310a, 320a.

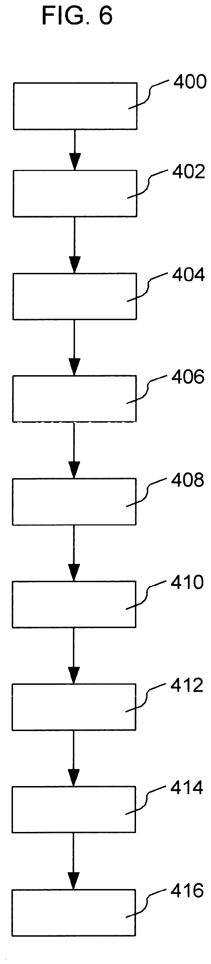

An installation procedure according to an embodiment for the scenario depicted by figure 5 is explained below with reference to the flow chart of figure 6.

In a first step 400, the reflector device 100 is attached to a point on the corridor side wall 300a' from which line of sight connections with either transceiver 310, 320 are given. Also, an external control device 130' is connected to an interface 104 of the reflector device 100 which enables the external control device 130' to control an operation of the reflector device 100, particularly to control movement of the movable reflector elements 102_1 (Fig. 1) of the reflector device 100.

According to an embodiment, the interface 104 may be a wired interface. In this case, not only control signals, but also electrical energy may be provided by said external control device 130' to said reflector device 100 as long as the devices 130', 100 are connected with each other. Alternatively or in addition, the interface 104 may also comprise a wireless interface, e.g. of a type which enables ad-hoc wireless network connectivity such as Bluetooth, WLAN, ZigBee, NFC (near field communication) or the like.

According to yet a further embodiment, at least one of said transceivers 310, 320 may comprise the functionality of the external control device 130'. However, for the further explanations, it is assumed that the control device 130' is an external device which may at least temporarily be connected to said reflector device 100.

In step 402, the first transceiver 310 initiates a sweeping sequence, cf. arrow s1 of Fig. 5, by transmitting millimeter-wave signals with an antenna characteristic that comprises a distinct main lobe, i.e. with said a so-called pencil-beam-characteristic. The external control device 130' monitors a received signal received at the reflector device 100, which is e.g. possible by evaluating incident radiation energy of millimeter-waves A2 (Fig. 1) received at the reflector device 100 from the first transceiver 310. Such information may e.g. be provided to the control device 130' by means of the interface 104 of the reflector device 100.

As soon as a significant amount of incident energy of millimeter-wave radiation on the reflector device 100 is detected by the control device 130' in step 404, said amount e.g. exceeding a predetermined first threshold, said control device 130' notifies the first transceiver 310 of this fact and instructs it to stop scanning its radio beam, cf. arrow s2 of Fig. 5, because it is concluded that the beam characteristic of the first transceiver 310 is now sufficiently centered in the direction on the reflector device 100. According to an embodiment, control signals may be exchanged between the control device 130' and the transceivers 310, 320 via a wired (not shown) and/or wireless interface, similar to interface 104 as explained above.

After that, in step 406 of figure 6, the first transceiver 310 stores the so determined beam direction or beam characteristic in an internal (preferably non-volatile) memory (not shown) and keeps this direction fixed.

Subsequently, in step 408 of figure 6, the procedure of the afore explained steps 402 to 406 is repeated between the reflector device 100 or its control device 130', respectively, and the second transceiver 320, whereby a suitable beam characteristic of the second transceiver's radio beam is determined. Respective control commands s3 may be issued by control device 130' using an interface as already explained above with respect to control of the first transceiver 310. The sweeping beam of the second transceiver 320 is illustrated by arrow s4 in figure 5.

As a result, in step 410 of figure 6, both transceivers 310, 320 each have readily adjusted their beam directions to the reflector device 100.

After that, in step 412, an adjustment of the reflector device 100 according to the principle of the embodiments is performed. For this purpose, either one of the transceivers 310 or 320 may transmit a millimeter-wave signal in the previously determined beam direction towards the reflector device 100. In the present example, the second transceiver 320 transmits such signal s5.

Also in step 412, the reflector device 100 moves said at least one reflector element 102_1 (figure 1) during a first operational state 200, which is also depicted in the high-level flow chart of Fig. 7, in order to obtain a desired reflective characteristic of the reflector device 100. Said movement may e.g. be performed according to a random pattern and/or a pseudo-random pattern and/or a deterministic pattern and may also include movement of further reflector elements of the reflector device 100 capable of individual movement.

Thus, a large number of resulting reflective patterns of the reflector device 100 is scanned in the course of step 412, whereby eventually, at step 414, a certain reflective pattern may be found that enables to reflect a significant amount of incident radiation A2 (figure 1) of said signal s5 originating from the second receiver 320 to the first transceiver 310. Hence, in step 414, if the currently receiving first transceiver 310 detects a sufficiently strong signal s6 (figure 1), it concludes that the currently applied reflective characteristic of the reflector device 100 is suitable to form an RF propagation path from the second transceiver 320 via said reflector device 100 to the first transceiver 310, and the currently receiving first transceiver 310 may transmit a control signal or notification (not shown) to the control device 130' instructing it to stop the tuning process of the reflector device 100.

Upon receiving such notification, in step 416, the control device 130' instructs reflector device 100 to store its currently set reflective pattern, preferably in a non-volatile memory of the reflector device 100, and to maintain the current setting, which corresponds to the second operational state 210 of the high-level flow-chart of Fig. 7. Alternatively or additionally, the pattern may be stored in the control device 130'.

Preferably, according to an embodiment wherein EAP actuators of the dielectric EAP-type are provided, the control device 130' may be disconnected from the interface 104 of the reflector device 100, and nevertheless the reflective pattern will still be maintained, because the dielectric EAP actuators retain their shape as controlled in proceeding step 414. If actuator technology is used for moving the reflector element(s) 102_1, .., which requires a permanent application of a control voltage uc (Fig. 2), the presence of an internal electric energy supply such as a battery 140 may be beneficial. Apart from this, according to an embodiment, the reflector device 100 may act as a passive device in the second operational state 210.

Alternatively or additionally to the external control device 130', the reflector device 100 may comprise an internal control unit 130 (Fig. 1) which performs some or all of the above explained functions of the control device 130'.

Advantageously, the reflector device 100 according to the embodiments enables to efficiently exchange millimeter-wave signals between transceivers 310, 320 although there may be no direct line of sight connection between these transceivers 310, 320. Also, due to its flexibility enabled by tuning individual reflector elements by the way of movement of the respective drive system 110, no precise mounting of the reflector 100 during deployment in the field, e.g. on the corridor side wall 300a' (Fig. 5), is required. The precise configuration of the reflective properties of the reflector element 100 may rather be performed after deployment of the devices 310, 320, 100 in the target setting such as an office building, other indoor (and/or outdoor) environments or generally surroundings with complex geometry or poor (a low degree of) LOS conditions, which has the further advantage that tolerances of the mounting positions and beam directions of the involved transceivers 310, 320 may be compensated as well as local parameters of the propagation paths (e.g., scattering characteristics of the surroundings).

Hence, according to a further aspect, a communication system 100, 310, 320 is provided which comprises a first transceiver 310 capable of transmitting and/or receiving microwave signals, especially millimeter-wave signals, and a second transceiver 320 capable of transmitting and/or receiving microwave signals, especially millimeter-wave signals, and at least one reflector device 100 according to the principle of the embodiments. According to a preferred embodiment, said first transceiver 310 is configured to transmit said microwave signals to said second transceiver 320 via said reflector device 100, and/or said second transceiver 320 is configured to transmit said microwave signals to said first transceiver 310 via said reflector device 100.

According to a further embodiment, the reflector device 100 may provide different links between more than two transceivers, i.e. in a time-multiplexed (serial) manner. This can be obtained by subsequently, preferably periodically, setting different reflective properties thus switching the reflector device 100 or the millimeter-wave propagation path s5, s6 provided thereby between different pairs of transceivers. Of course, according to further embodiments, transceiver chains having n many transceivers and (n-1) many reflector devices arranged between said transceivers according to the embodiments may also be provided.
The principle according to the embodiments advantageously enables to provide a backhaul system in buildings and comparable obstructed areas without involving wired links and other comparatively complex and costly techniques. Advantageously, the reflector device according to the embodiments can be used for reflecting electromagnetic waves e.g. in the frequency range of several tens to hundreds GHz. However, the principle according to the embodiments is not limited to RF signals of this frequency range but may also be employed for signals with frequencies lower than 1 GHz and for signals with frequencies higher than several hundreds of GHz.

The description and drawings merely illustrate the principles of the invention. It will thus be appreciated that those skilled in the art will be able to devise various arrangements that, although not explicitly described or shown herein, embody the principles of the invention and are included within its scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

## Claims

1. Reflector device (100) for microwaves, particularly for millimeter waves, comprising a plurality of reflector elements (102_1, 102_2, ..), wherein said reflector device (100) is configured to move at least one reflector element (102_1) of said plurality of reflector elements (102_1, 102_2, ..) with respect to at least one further reflector element (102_2) of said plurality of reflector elements (102_1, 102_2, ..), wherein said reflector device (100) comprises at least one drive system (110) for moving said at least one reflector element (102_1), **characterized in that** said drive system (110) comprises at least one electroactive polymer, EAP, actuator (1010), and wherein said reflector device (100) comprises a substrate (120), wherein said plurality of reflector elements (102_1, 102_2, ..) is arranged on a first surface (1020a) of said substrate (1020), and wherein at least one mounting element (1022) for mounting said reflector device (100) to a further device, particularly to a surface of a wall, is arranged on at least one further surface (1020b) of said substrate (120).

2. Reflector device (100) according to claim 1, wherein said mounting element (1022) comprises an adhesive layer (1022).

3. Reflector device (100) according to one of the preceding claims, wherein said reflector device (100) comprises a) a local control unit (130) and/or b) an interface (104) for connecting to an external control device (130') for controlling an operation of said reflector device (100).

4. Reflector device (100) according to one of the preceding claims, wherein said reflector device (100) comprises an electrical energy supply (140).

5. Method of operating a reflector device (100) for microwaves, particularly for millimeter waves, according to one of the claims 1 to 4.

6. Method according to claim 5, wherein said reflector device (100) moves said at least one reflector element (102_1) during a first operational state (200) in order to obtain a desired reflective characteristic of the reflector device (100), and wherein said reflector device (100) maintains said desired reflective characteristic in a second operational state (210).

7. Method according to claim 6, wherein in said first operational state (200) at least one reflector element (102_1) is moved according to a random pattern and/or a pseudo-random pattern and/or a deterministic pattern.

8. Control device (130') for controlling an operation of a reflector device (100) according to one of the claims 1 to 4, wherein said control device (130') is configured to transmit to said reflector device (100) control commands for influencing an operation of said reflector device (100) and/or to receive from said reflector device (100) information characterizing an operational state of said reflector device (100).

9. Communication system comprising a first transceiver (310) capable of transmitting and/or receiving microwave signals, especially millimeter-wave signals, and a second transceiver (320) capable of transmitting and/or receiving microwave signals, especially millimeter-wave signals, and at least one reflector device (100) according to one of the claims 1 to 4.

10. Communication system according to claim 9, wherein said first transceiver (310) is configured to transmit said microwave signals to said second transceiver (320) via said reflector device (100) and/or wherein said second transceiver (320) is configured to transmit said microwave signals to said first transceiver (310) via said reflector device (100).

## Patentansprüche

1. Reflektoreinrichtung (100) für Mikrowellen, insbesondere für Millimeterwellen, umfassend mehrere Reflektorelemente (102 1, 102_2, ..), wobei die Reflektoreinrichtung (100) dafür ausgebildet ist, mindestens ein Reflektorelement (102_1) der mehreren Reflektorelemente (102_1, 102_2, ..) bezüglich mindestens eines weiteren Reflektorelements (102_2) der mehreren Reflektorelemente (102_1, 102_2, ..) zu bewegen, wobei die Reflektoreinrichtung (100) mindestens ein Antriebssystem (110) zum Bewegen des mindestens einen Reflektorelements (102_1) umfasst,
**dadurch gekennzeichnet, dass**
das Antriebssystem (110) mindestens einen Elektroaktiv-Polymer- bzw. EAP-Aktuator (1010) umfasst und wobei die Reflektoreinrichtung (100) ein Substrat (120) umfasst, wobei die mehreren Reflektorelemente (102 1, 102_2, ..) auf einer ersten Oberfläche (1020a) des Substrats (1020) angeordnet sind und wobei mindestens ein Befestigungselement (1022) zum Befestigen der Reflektoreinrichtung (100) an einer weiteren Einrichtung, insbesondere an einer Oberfläche einer Wand, auf mindestens einer weiteren Oberfläche (1020b) des Substrats (120) angeordnet ist.

2. Reflektoreinrichtung (100) nach Anspruch 1, wobei das Befestigungselement (1022) eine Haftschicht (1022) umfasst.

3. Reflektoreinrichtung (100) nach einem der vorhergehenden Ansprüche, wobei die Reflektoreinrichtung (100) a) eine lokale Steuereinheit (130) und/oder b) eine Schnittstelle (104) zum Verbinden mit einer externen Steuereinrichtung (130') zum Steuern eines Betriebs der Reflektoreinrichtung (100) umfasst.

4. Reflektoreinrichtung (100) nach einem der vorhergehenden Ansprüche, wobei die Reflektoreinrichtung (100) eine elektrische Energieversorgung (140) umfasst.

5. Verfahren zum Betreiben einer Reflektoreinrichtung (100) für Mikrowellen, insbesondere für Millimeterwellen, nach einem der Ansprüche 1 bis 4.

6. Verfahren nach Anspruch 5, wobei die Reflektoreinrichtung (100) das mindestens eine Reflektorelement (102_1) während eines ersten Betriebszustands (200) bewegt, um eine gewünschte Reflexionscharakteristik der Reflektoreinrichtung (100) zu erhalten, und wobei die Reflektoreinrichtung (100) die gewünschte Reflexionscharakteristik in einem zweiten Betriebszustand (210) beibehält.

7. Verfahren nach Anspruch 6, wobei in dem ersten Betriebszustand (200) mindestens ein Reflektorelement (102_1) gemäß einem Zufallsmuster und/oder einem Pseudozufallsmuster und/oder einem deterministischen Muster bewegt wird.

8. Steuereinrichtung (130') zum Steuern eines Betriebs einer Reflektoreinrichtung (100) nach einem der Ansprüche 1 bis 4, wobei die Steuereinrichtung (130') dafür ausgebildet ist, zu der Reflektoreinrichtung (100) Steuerbefehle zu übertragen zum Beeinflussen eines Betriebs der Reflektoreinrichtung (100) und/oder von der Reflektoreinrichtung (100) Informationen zu empfangen, die einen Betriebszustand der Reflektoreinrichtung (100) kennzeichnen.

9. Kommunikationssystem umfassend einen ersten Sendeempfänger (310), der Mikrowellensignale, insbesondere Millimeterwellensignale, übertragen und/oder empfangen kann, und einen zweiten Sendeempfänger (320), der Mikrowellensignale, insbesondere Millimeterwellensignale, übertragen und/oder empfangen kann, und mindestens eine Reflektoreinrichtung (100) nach einem der Ansprüche 1 bis 4.

10. Kommunikationssystem nach Anspruch 9, wobei der erste Sendeempfänger (310) dafür ausgebildet ist, die Mikrowellensignale zu dem zweiten Sendeempfänger (320) über die Reflektoreinrichtung (100) zu übertragen und/oder wobei der zweite Sendeempfänger (320) dafür ausgebildet ist, die Mikrowellensignale zu dem ersten Sendeempfänger (310) über die Reflektoreinrichtung (100) zu übertragen.

## Revendications

1. Dispositif réflecteur (100) pour micro-ondes, en particulier pour ondes millimétriques, comprenant une pluralité d'éléments réflecteurs (102_1, 102_2, ..), dans lequel ledit dispositif réflecteur (100) est conçu pour déplacer au moins un élément réflecteur (102_1) de ladite pluralité d'éléments réflecteurs (102_1, 102_2, ..) par rapport à au moins un autre élément réflecteur (102_2) de ladite pluralité d'éléments réflecteurs (102 1, 102_2, ..), dans lequel ledit dispositif réflecteur (100) comprend au moins un système d'entraînement (110) destiné à déplacer ledit au moins un élément réflecteur (102_1), **caractérisé en ce que**
ledit système d'entraînement (110) comprend au moins un actionneur (1010) en polymère électroactif, EAP, et dans lequel ledit dispositif réflecteur (100) comprend un substrat (120), dans lequel ladite pluralité d'éléments réflecteurs (102_1, 102_2, ..) est agencée sur une première surface (1020a) dudit substrat (1020), et dans lequel au moins un élément de montage (1022) destiné au montage dudit dispositif réflecteur (100) sur un autre dispositif, en particulier sur une surface d'un mur, est agencé sur au moins une autre surface (1020b) dudit substrat (120).

2. Dispositif réflecteur (100) selon la revendication 1, dans lequel ledit élément de montage (1022) comprend une couche d'adhésif (1022).

3. Dispositif réflecteur (100) selon l'une des revendications précédentes, dans lequel ledit dispositif réflecteur (100) comprend a) une unité de commande locale (130) et/ou b) une interface (104) pour la connexion à un dispositif de commande externe (130') destiné à commander un fonctionnement dudit dispositif réflecteur (100) .

4. Dispositif réflecteur (100) selon l'une des revendications précédentes, dans lequel ledit dispositif réflecteur (100) comprend une alimentation en énergie électrique (140).

5. Procédé de fonctionnement d'un dispositif réflecteur (100) pour micro-ondes, en particulier pour ondes millimétriques, selon l'une des revendications 1 à 4.

6. Procédé selon la revendication 5, dans lequel ledit dispositif réflecteur (100) déplace ledit au moins un élément réflecteur (102_1) pendant un premier état de fonctionnement (200) afin d'obtenir une caractéristique de réflexion souhaitée du dispositif réflecteur (100), et dans lequel ledit dispositif réflecteur (100) maintient ladite caractéristique de réflexion souhaitée dans un second état de fonctionnement (210).

7. Procédé selon la revendication 6, dans lequel, dans ledit premier état de fonctionnement (200), au moins un élément réflecteur (102 1) est déplacé selon un motif aléatoire et/ou un motif pseudo-aléatoire et/ou un motif déterministe.

8. Dispositif de commande (130') destiné à commander un fonctionnement d'un dispositif réflecteur (100) selon l'une des revendications 1 à 4, dans lequel ledit dispositif de commande (130') est conçu pour transmettre audit dispositif réflecteur (100) des ordres de commande destinés à influencer un fonctionnement dudit dispositif réflecteur (100) et/ou pour recevoir dudit dispositif réflecteur (100) des informations caractérisant un état de fonctionnement dudit dispositif réflecteur (100).

9. Système de communication comprenant un premier émetteur-récepteur (310) capable d'émettre et/ou de recevoir des signaux de micro-ondes, en particulier des signaux d'ondes millimétriques, et un second émetteur-récepteur (320) capable d'émettre et/ou de recevoir des signaux de micro-ondes, en particulier des signaux d'ondes millimétriques, et au moins un dispositif réflecteur (100) selon l'une des revendications 1 à 4.

10. Système de communication selon la revendication 9, dans lequel ledit premier émetteur-récepteur (310) est conçu pour émettre lesdits signaux de micro-ondes vers ledit deuxième émetteur-récepteur (320) via ledit dispositif réflecteur (100) et/ou dans lequel ledit second émetteur-récepteur (320) est conçu pour émettre lesdits signaux de micro-ondes vers ledit premier émetteur-récepteur (310) via ledit dispositif réflecteur (100) .
